# EUROPEAN PATENT APPLICATION

(11) **EP 3 048 574 A1**
(43) Date of publication of application: **27.07.2016**
(21) Application number: 16152440.0
(22) Date of filing: 22.01.2016
(51) Int. Cl.: G06Q 40/00

(54) **METHOD AND SYSTEM FOR PROVISIONING CURATED INSURANCE SERVICE**

(30) Priority: 23.01.2015 IN 242MU2015
(71) Applicant: Tata Consultancy Services Limited, Maharashtra (IN)
(72) Inventor: MAJUMDAR, Arunashi, Edison, NJ New Jersey 08837 (US); KRISHNAN, Govindaraman, Edison, NJ New Jersey 08837 (US); RAMADASS, Parthiban, Edison, NJ New Jersey 08837 (US); OJHA, Sushil, Edison, NJ New Jersey 08837 (US); SENTHIL, Balasubramanian Kumar, 603103 Chennai - Tamil Nadu (IN)
(74) Representative: Goddar, Heinz J.

(57) **Abstract**

A method and system is provided for provisioning curated insurance service. The present application provides a method and system for provisioning curated insurance service, comprises receiving consumer data along with geo-spatial data about insurance products; provisioning through a platform (102), plurality of insurance products to the consumer based on the consumer data; receiving from the consumer, one or more criteria for the insurance product selection; and provisioning quotation for a single or group insurance product to the consumer based on the one or more criteria through the platform (102).

## Description

### CROSS-REFERENCE TO RELATED APPLICATIONS AND PRIORITY

The present application claims priority from Indian Patent Application No. 242/MUM/2015, filed on January 23, 2015. The entire contents of the aforementioned application are incorporated herein by reference.

### TECHNICAL FIELD

The present disclosure described herein, in general, relates to a system and method for provisioning curated services to a consumer based on real time analysis of data.

### BACKGROUND OF THE INVENTION

Traditionally companies offering products do not provide a unified solution to sell multiple insurance and other business products or services to their consumer in one transaction while keeping the consumer aware of the actual prices including applicable multi-line or additional discounts that is otherwise processed in a back end expensive process. This kind of scenario is generally observed in industries from insurance and finance sectors, which often offers prepackaged or individual products to their consumers or prospects.

However, providing an assisted experience for the consumer during the course of the transaction is also challenging because of the complexities present in existing solutions and thereby eluding the consumers of the seamless experience they would accrue as a result of any shopping experience. The main challenge is to bundle distinct products belonging to different Lines of Business (LoB). Each product has its own lifecycle and different processes and rules for quoting, acquisition, servicing, and rating and pricing, discounts, product models and promotions which further add to the companies integration challenges. Bringing all the products under one umbrella to provide the consumer an enterprise view with accurate price is challenging.

All the Lines of Business maintain independent applications for the product offering and for maintenance of the lifecycle. There is lack of a common workflow processes that could define a single consumer experience, hence existing solutions majorly lacks in providing the consumer a seamless multi-quoting and purchase experience.

### SUMMARY OF THE INVENTION

Before the present systems and methods, are described, it is to be understood that this application is not limited to the particular systems, and methodologies described, as there can be multiple possible embodiments which are not expressly illustrated in the present disclosures. It is also to be understood that the terminology used in the description is for the purpose of describing the particular versions or embodiments only, and is not intended to limit the scope of the present application. This summary is provided to introduce concepts related to systems and methods for provisioning curated insurance service and the concepts are further described below in the detailed description. This summary is not intended to identify essential features of the disclosure nor is it intended for use in determining or limiting the scope of the disclosure.

The present disclosure discloses a method and system for provisioning curated insurance service. More specifically the method and system may facilitate, through a platform, provisioning of curated insurance service based on real-time analysis of the data associated with consumer. Furthermore, the system and the method may enable an Insurer to recommend complete Insurance ecosystem to meet the need of the consumer based on real-time analytics information about the heuristic information about the consumer, social media and geo-spatial analysis. Further, the system and the method may allow the Insurers to also package the products together, control the shopping workflow, enable single checkout for the complete packet. Furthermore, the system and the method may be enabled to digitally integrate various quotes and acquisition process for various products from any lines of businesses. Also, the system and the method may be enabled for partner product/network management. Further, the system and the method may be configured to provision single checkout process for all the products.

### BRIEF DESCRIPTION OF THE DRAWINGS

The foregoing summary as well as detailed description of embodiments of the present disclosure is better understood when read in conjunction with the appended drawings. For the purpose of illustrating the disclosure, there is shown in the present document example constructions of the disclosure; however, the disclosure is not limited to the specific methods and apparatus disclosed in the document and the drawings.

The detailed description is described with reference to the accompanying figures. In the figures, the left-most digit(s) of a reference number identifies the figure in which the reference number first appears. The same numbers are used throughout the drawings to refer like features and components.
Figure 1 illustrates a system for provisioning curated insurance service, in accordance with an embodiment of the present disclosure;
Figure 2 illustrates the system, in accordance with an embodiment of the present disclosure;
Figure 3 illustrates architecture of the system, in accordance with an embodiment of the present disclosure;
Figure 4 illustrates the Product Participation Framework component, in accordance with an embodiment of the present disclosure;
Figure 5 illustrates the Multi-Line Discount (MLD) framework component, in accordance with an embodiment of the present disclosure;
Figure 6 illustrates the Analytics Framework, in accordance with an embodiment of the present disclosure;
Figures 7(a) and 7(b) illustrate User Interfaces of the system, in accordance with an embodiment of the present disclosure; and

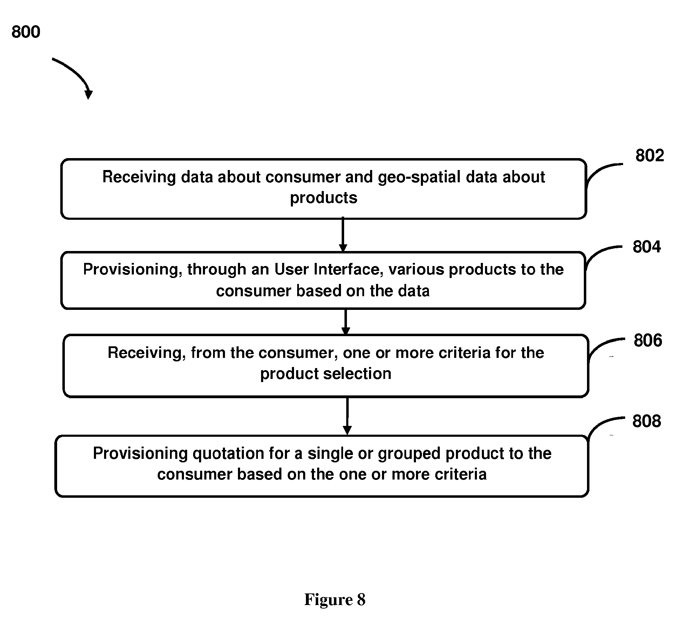

Figure 8 illustrates the method for provisioning curated insurance service, in accordance with an embodiment of the present disclosure.

### DETAILED DESCRIPTION OF THE INVENTION

Some embodiments of this disclosure, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items. It must also be noted that the singular forms "a," "an," and "the" include plural references unless the context clearly dictates otherwise. Although any systems and methods similar or equivalent to those described herein can be used in the practice or testing of embodiments of the present disclosure, the exemplary, systems and methods are now described. The disclosed embodiments are merely exemplary of the disclosure, which may be embodied in various forms.

Various modifications to the embodiment will be readily apparent to those skilled in the art and the generic principles herein may be applied to other embodiments. However, one of ordinary skill in the art will readily recognize that the present disclosure is not intended to be limited to the embodiments illustrated, but is to be accorded the widest scope consistent with the principles and features described herein.

The present disclosure provides a method and system for provisioning curated insurance service. The present disclosure discloses architecture, of the system, enabling the companies, offering products from various sectors such as Insurance and Finance, to provide a unified solution to sell multiple products in single workflow, while keeping the consumer aware of the actual prices of the products including applicable multi-line or additional discounts. This may result into offering bundled packages of the products from the company's portfolio.

Furthermore, the method and the system may be configured to build recommended and suitable products through usage of the consumer behavioral data and geospatial data about the products offered to the consumers through the platform. The consumer's affinity to purchase different products may be determined through heuristic data which may be mined from various social media platforms and also through Inbound/Outbound analytics services provided by the company.

While other aspects of the present disclosure, the system(s) and method(s) for provisioning curated insurance service as underlying theme may be implemented in any number of different computing systems, environments, and/or configurations, the embodiments may be described in the context of the following exemplary system.

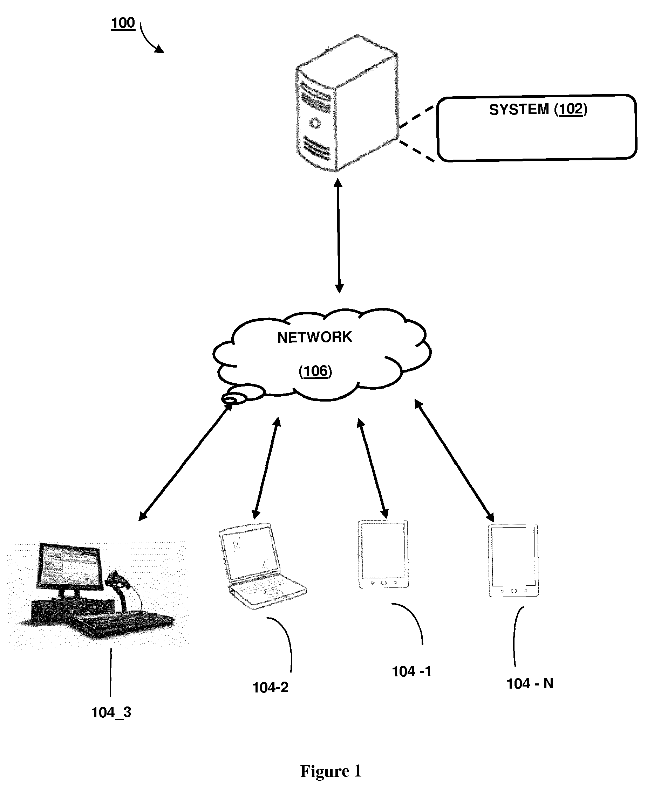

Although the present disclosure is explained considering that the system 102 is implemented on a server, it may be understood that the system 102 as shown in figure 1 may also be implemented in a variety of computing systems, such as a laptop computer, a desktop computer, a notebook, a workstation, a mainframe computer, a network server, a cloud-based computing environment and the like. It will be understood that the system 102 (hereinafter referred to as "the platform 102") may be accessed by multiple users/consumers through one or more user/consumer devices 104-1, 104-2...104-N, collectively referred to as user devices 104 hereinafter, or applications residing on the user devices 104-1 to 104-N. In one implementation, the platform 102 may comprise the cloud-based computing environment in which a user may operate individual computing systems configured to execute remotely located applications. Examples of the user devices 104 may include, but are not limited to, a portable computer, a personal digital assistant, a handheld device, and a workstation. The user devices 104 are communicatively coupled to the platform 102 through a network 106.

In one implementation, the network 106 may be a wireless network, a wired network or a combination thereof. The network 106 can be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

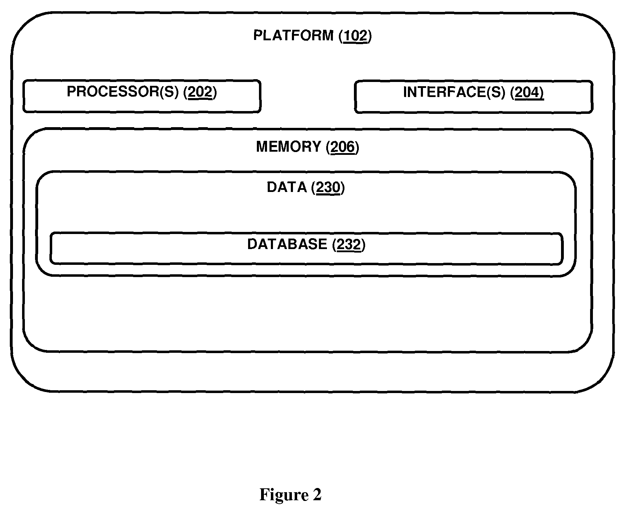

Referring now to figure 2, the platform 102 is illustrated in accordance with an embodiment of the present disclosure. In one embodiment, the platform 102 may include a processor 202, an input/output (I/O) interface 204, and a memory 206. The processor 202 may be implemented as one or more microprocessors, microcomputers, microcontrollers, digital signal processors, central processing units, state machines, logic circuitries, and/or any devices that manipulate signals based on operational instructions. Among other capabilities, the processor 202 is configured to fetch and execute computer-readable instructions stored in the memory 206.

The I/O interface 204 may include a variety of software and hardware interfaces, for example, a web interface, a graphical user interface, and the like. The I/O interface 204 may allow the platform 102 to interact with the user directly or through the user devices 104. Further, the I/O interface 204 may enable the platform 102 to communicate with other computing devices, such as web servers and external data servers (not shown). The I/O interface 204 can facilitate multiple communications within a wide variety of networks and protocol types, including wired networks, for example, LAN, cable, etc., and wireless networks, such as WLAN, cellular, or satellite. The I/O interface 204 may include one or more ports for connecting a number of devices to one another or to another server.

The memory 206 may include any computer-readable medium and computer program product known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory 206 may include data 230. The data 230, amongst other things, serves as a repository for storing data processed, and received by the platform 102. The data 230 may also include a database 232.

The working of the platform 102 may depend upon following frameworks as a) Integration Framework, b) Shopping Integration Framework, c) Partner Network Management Framework, d) Product Catalog Framework, and e) Real-time Analytics Framework. Further, the platform 102 may comprise configuration layers in each framework for managing Application Programming Interface (API) and Data models. These frameworks may further be described in following description.

The integration framework (IF) may further comprise the APIs and Serial Peripheral Interface (SPIs) facilitating the product bundling wherein partner products may be brought together using the IF. The platform 102, through the IF, may enable the consumer to access the platform 102 for handling transactions, communication, and workflow management. The interfaces 204 of the platform 102 may be configured so as to enable the IF to adapt to other business streams like Bank, Life, Healthcare, retail, etc. The APIs and the SPIs may be implemented through REST (Representational State Transfer) integration framework, which may have the contract definitions to enable 2-way communication between a Shopping Cart and different Line of Business. The IF may be configured to provide Responsive web/content negotiation Java Server Pages Tag Library (JSTL) which may tag variety of devices. Further, the IF may facilitate common workflow for all participating products on the platform 102. The IF, through the platform 102, may be enabled to unify multiple checkouts for the products and other kinds of processes under one checkout process and further provide ability to switch payment gateways to Payment Card Industry (PCI) compliant vendor.

In an embodiment, the Partner Network Integration Framework (PNIF) may comprise a strategy to manage the partner products. Also, the PNIF may provide Online Partner Integration Interface, as one of the interfaces 204, which may be implemented by the Partner Company to provide latest prices and other partner product details to the consumer. Offline Partner Data Store holds information about the partner products, ratings, reviews and etc. Furthermore, the Analytics Framework (AF) may be configured to mine data from the social media platforms and may record the data. Heuristic data about the consumer may be stored in the analytics data store of the database 232. The AF may further comprise a Geo-location Analytics which may facilitate sending context driven marketing messages to recommend relevant products to the consumers.

In another embodiment, the Product Catalogue Framework (PCF) may be configured to provide Line of Business (LoB) products and the partner product recommendation based on the consumer data, the geo-location data and other customized rules. Further, the PCF may comprise rules to identify the partner products based on the selections made by the consumer and the respective responses to the queries of the consumer. The PCF may further comprise "*quotability rules*" maintained in the PCF and may ensure that only quotable products are available to the consumer. In an embodiment, the products displayed may vary based on access channels. For example, for Sales Channel, the Product Catalogue may display products which the Sales Associate is licensed and authorized to sell within each jurisdiction. In another example, for Customer channel, a more simple & intuitive product storefront may be displayed. The platform 102 may be explained through architecture as discussed in the following description.

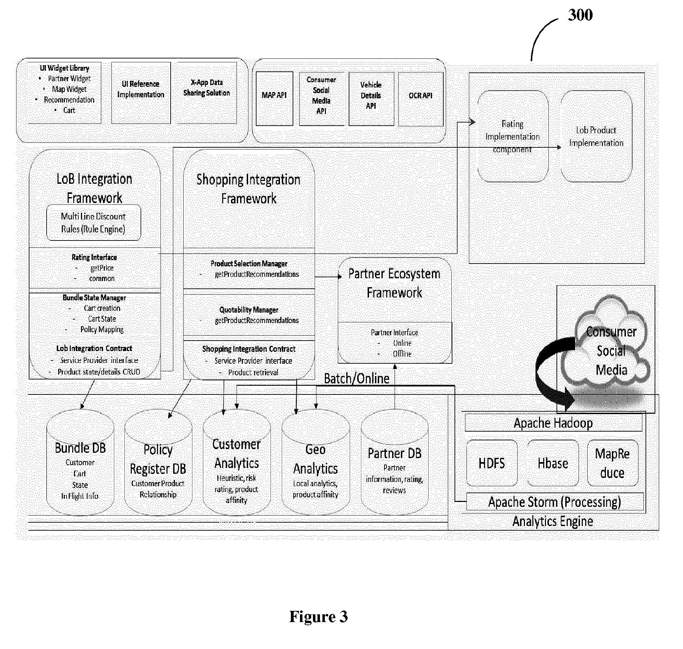

Referring to figure 3, the architecture for the provisioning curated insurance service is illustrated. The various frameworks discussed in foregoing description may be supported by the service oriented application architecture (300), as shown in the figure 3. The architecture 300 may comprise various layers including a Presentation layer, a Middleware layer, a Service layer, and a Resource layer. The Presentation Layer may comprise Bundle User Interface (UI) Application, LoB UI Application for Auto/Property/Life/Health/Bank and also gateway controllers that may handle entry into the product workflow or the bundle experience. The architecture 300 may also hosts the REST IF, the contract definitions, and Responsive web/content negotiation JSTL tags to support variety of devices. Internationalization and static content managers may be comprised in the Presentation Layer that may connect with an external content server.

Furthermore, the architecture 300 may comprise the Middleware Layer which may comprise an Enterprise Service Bus (ESB) that may handle virtual to physical endpoint mapping, request routing to service tier, service orchestration in certain heterogeneous system integration and data mapping. The Presentation tier may not make call to the service tier without the Middleware Layer. Further, the architecture 300 may comprise the Service Layer which may be configured to host all the business services and Rules Decision Services deployed on the Server. The Service Layer may further be configured to integrate with resources through Data Access Object (DAO) and may connect with Drools Rules Engine. Additionally, the architecture 300 may comprise the Resource Layer which may host the Mongo Databases (DB) for the bundle, the partner, the geo-analytics, and the consumer analytics. The heuristic data feed of the consumer and the social media data feed may be harnessed through the Apache Hadoop Analytics framework and stored into the Mongo DB. The architecture 300 may further be explained through the frameworks and associated components of the frameworks in the following description.

In an embodiment, the IF may further comprise components like a Product Participation Framework component (400), a Product Participation Pattern component, an Application to Application Data Sharing Component, and a Multi-Line Discount (MLD) component (500) based on coupon approach. These components may be explained one by one.

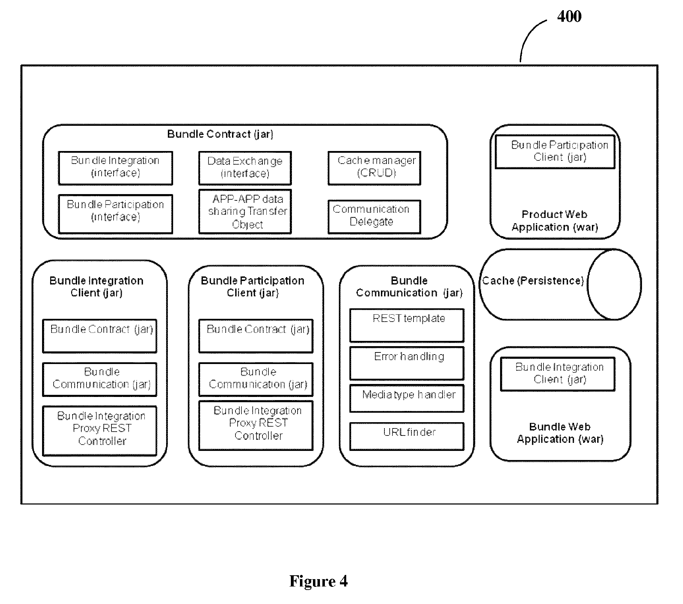

In one aspect of the present disclosure, in the Product Participation Framework component (400), the participation may be realized as isolated Web applications. The REST methodology may be adapted to build the Product Participation Framework component (400). The RESTful integration may further be applied to describe the desired web architecture. A web application and the Bundle may be built to chain the workflow of the products and the payment application. The platform 102 may comprise hosting the interfaces 204 along with the REST APIs and may provide support to realize the workflow and may persist the state of workflow as the experience ends. Further, figure 4 illustrates components of the Product Participation Framework component (400).

Now referring to the figure 4, in one embodiment, the Product Participation Framework component (400) may comprise components like 1) Contract component- to enable 2-way communication between the products and the Bundle. The application-to-application data sharing interface and corresponding delegate may also contain within the contract, 2) Communication component- may have classes that may enable the REST communication between participants and URI (Universal Resource Identifier) discovery for the REST API. The communication component may handle cross cutting concerns like security, logging, exception handling and message handling. 3) Integration Client component- may comprise the REST API that may allow interfacing with the Bundle, and 4) Participation Client component- may have a proxy REST API that may allow interfacing with the respective product.

In another aspect, as shown in the figure 4, the Product Participation Pattern component may be configured to facilitate communication between web applications through two ways. These two ways may be i) during the lifetime, if there is a data or processing dependency on other applications, the workflow may make use of the participation or integration REST APIs and ii) for initializing or terminating the product, sub-flow within the larger workflow may use Application-to-Application data sharing pattern described in the following description through the Application to Application Data Sharing Component.

Furthermore, the Application to Application Data Sharing Component may be enabled to implement a design pattern for sending the data from a Web Application in one environment to another Web Application in a different environment in preparation for a transition of the User Experience from the first Web Application (Source) to the second (Destination).

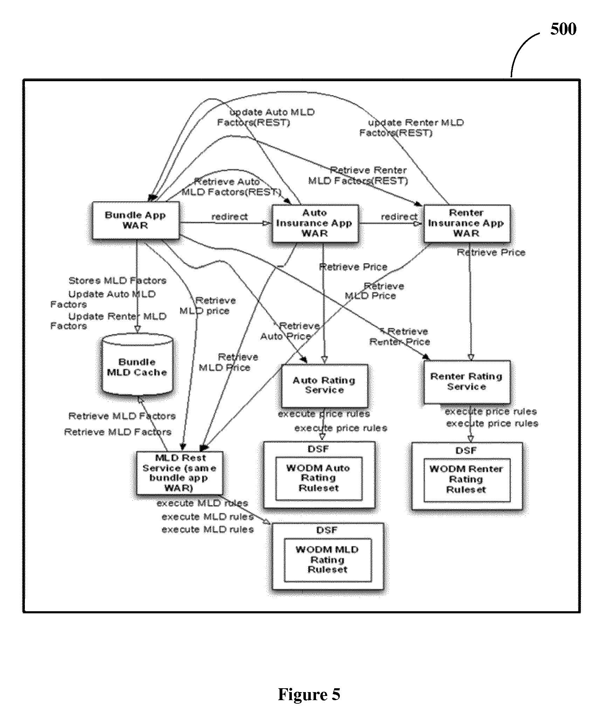

In yet another aspect of the present disclosure, the Multi-Line Discount (MLD) component (500) based on the coupon approach may comprise the MLD discount rules available in a common service rather than in the individual product service. In an alternative aspect, the MLD component may be adapted optionally, as the Insurance companies, as one example, might want to use their own rating engine. The MLD component works in steps as explained using figure 5.

As shown in the figure 5, in first step, the consumer may launch the bundle application that contains existing auto and renter product. In one scenario, the bundle application may retrieve the MLD factors of both the auto and the renter product by calling its REST interface. In next step, once the bundle application retrieves both the MLD factors, the MLD component may store the MLD factors in the cache. In next step, after updating the cache, the Bundle application may invoke the auto and the renter rating web service to retrieve the latest price of each product. Further, the MLD component may then make a call to the Decision Services to execute the MLD rules. The method and the system may be enabled to display the multiline discount value for each product. If the consumer retrieves an auto product from the bundle application and makes some change in the auto MLD factors data, auto application may be enabled to call the bundle application REST interface to update the latest auto MLD factors into the cache. In next step, the auto application may then call its own rating service and then the common MLD REST interface may retrieve the modified price of the products. This common MLD REST interface, a part of the bundle application, may fetch the latest MLD factors from the cache and may further pass the data to the Decision Services to execute the MLD rules. If the consumer continues to the renter product from the auto application and makes some change in the renter MLD factors data, renter application may call the bundle application REST interface to update the latest renter MLD factors into the cache. Furthermore, the renter application may then call its own rating service and then the common MLD REST interface to retrieve the modified price. This common MLD REST interface, a part of the bundle application, may fetch the latest MLD factors from the cache and passes the data to the Decision Services to execute the MLD rule set using the Decision Service Framework for the rule engine in use.

Further, third framework of the architecture 300 may be the Partner Network Management Framework (PNMF). The PNMF may be adapted to provide a strategy to manage the partner products. The PNMF may be configured to facilitate an Online Partner Integration Interface for providing latest prices and other product details, the consumer review and the consumer ratings. Further, the PNMF may be configured to provide an Offline Partner Store which may be designed to hold information about the partner products, ratings, reviews, etc. Also the PNMF may further be configured to maintain the affinity of the partner products with one of many products from the Insurer.

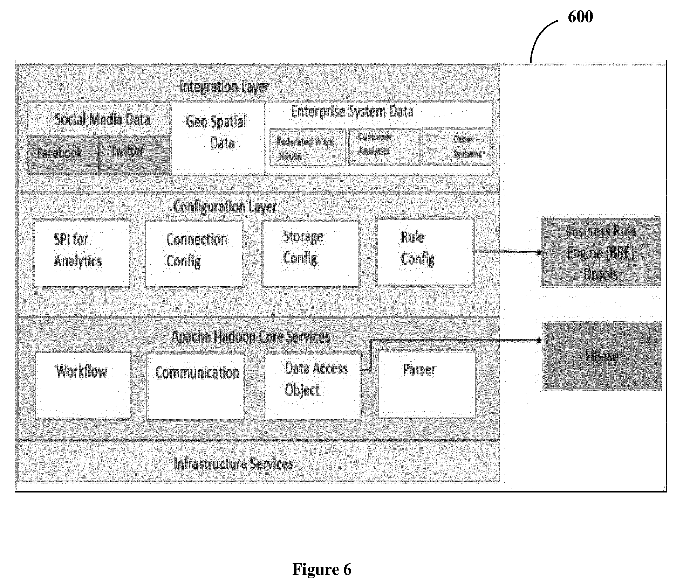

The fourth framework of the architecture 300, the Analytics Framework, may comprise data mining from the Social Media platforms and may record the data mined into the persistence layer. The Analytics Framework may further comprise four layers as Infrastructure layer (600), Core Service layer, Configuration layer, and Integration layer. These four layers may be illustrated using figure 6.

The figure 6 illustrates the Infrastructure Layer (600) may constitute various tools such as Apache Hadoop, HBase DB, and Apache Storm. Further, the Core Services Layer may have the core components of the analytics framework. The Core Services Layer may be responsible for common workflow patterns, integration patterns/services, resource access APIs, core interfaces and parsers. The MapReduce APIs may also be included in the Core Services layer. The Configuration Layer may have the data interfaces for communications with data feeders and the data models. This layer may be made fully configurable and data models may be changed and new ones may be added to support specific enterprise/API needs. The Integration Layer may be adapted to read the data fed. The platform 102 may be configured to support the Social Media feeders from Facebook and Twitter, Geospatial data feed, Weather feeds, and any number enterprise systems to feed the heuristic consumer data or the data from other applications. The MapReduce implementation for each of these integration points may be programmed to map the consumers, the geo-locations and the product affinities. The reduced output may be persisted in the HBase DB. The consumer and geo-location categories on the platform 102 may be made configurable. The enterprises may come up with their own categorization technique and may be enabled to configure the values in the framework. The rules that decide what kind of the consumer may most likely fall into which group are configured as well.

Furthermore, figure 6 illustrates the MapReduce programs need to be created for each data feeder thereby trimming unnecessary information from the data feed and extract necessary values that may help in arriving at the consumer and the geography categorization. In an embodiment, each consumer and the geographical category may be mapped with the Insurance products and the partner products. The final mapping may be persisted in the HBase DB. The frequency of the data feed may be configurable at the consumer end. In an embodiment, the platform may be enabled to support real-time data feed.

The fifth framework of the architecture 300 may be the Product Catalogue Framework. The Product Catalogue Framework may be adapted to connect the consumer with the correct application to process the quote. The Product Catalogue Framework is the entry point for all product sales for both the consumers and the Sales Associate. The consumer research may help to predict the consumer's want, the ability to quote and the purchase the insurance and financial products at the times and places that are convenient for them. Also the products which get displayed on the platform 102 may vary based on the access channels. For Sales Channel, the Product Catalogue Framework may display the products which the Sales Associate is licensed and authorized to sell within each jurisdiction. In the Consumer Channel, a simpler & intuitive product storefront may be displayed, along with appropriate marketing messages, so that the Consumer may be provided a remarkable shopping experience.

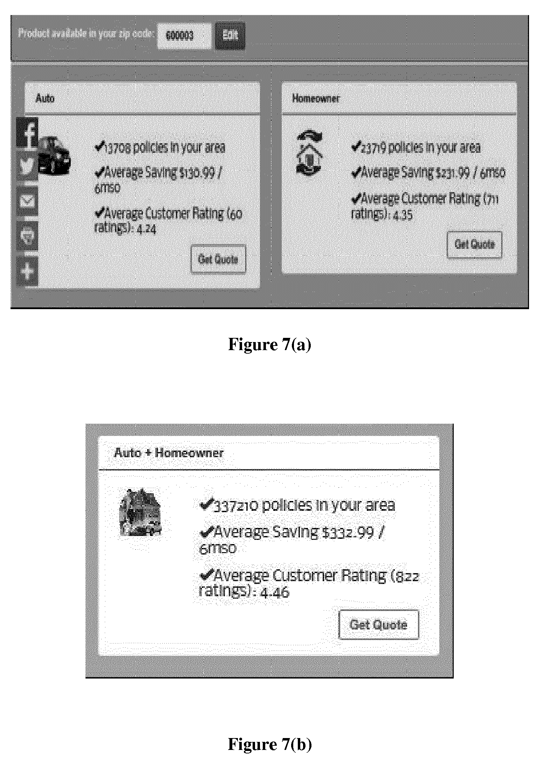

The method and the system may be explained in detail using an exemplary embodiment. According the exemplary embodiment, figure 7(a) illustrates the different UIs of the platform 102 for different frameworks as discussed above. In one aspect, the platform 102 may be enabled to display available insurance products in tiles view based on zip code. In another aspect, the platform 102 may automatically detect the consumer's zip code using Google API and may display the available insurance products based on that zip code. The product selection rules may be externalized using Drools API (BRMS tool). Each product tile may display information such as average savings for the consumers, average consumer ratings and number of policies sold in the zip location. In another embodiment, for the bundle product, the tile section on the UI of the platform 102 in the figure 7(a), the average savings include both multi-line discounts on each product and bundle discount. For the consumers logged in with their Facebook credentials, the tile may also display the total number of consumer's friend in the Facebook who purchased this bundle product.

Upon choosing any single product or a bundled product, by the consumer, personal information screen may be displayed to collect the personal information of the consumer as shown in the figure 7(b). In yet another embodiment, by default, the platform 102 may pop up Facebook login screen to allow the consumer to login and to automatically fetch consumer information from the Facebook account to populate in the personal information screen as shown in the figure 7(b). In another embodiment, in case the consumer do not have the Facebook account or do not want to use it, the consumers may have an option to upload the scanned copy of their driving license. This page may also allow consumer to manually enter their personal information's like name, DOB, address and so on. In addition to that, the personal information screen may also be enabled to display Google map at the bottom for the quoted location using the Google Maps API.

After selecting all the required fields, a Quote Summary, pricing information and different coverage packages associated with the selected product may be displayed to the consumer. The UI further allows the consumer to choose their own coverage by using custom coverage option and its pricing are determined based on the options selected.

In another aspect of the exemplary embodiment, for the bundled product scenario, the Bundled Summary screen may be displayed to show the each product details associated with the bundle and its individual pricing information. The consumers may modify insurance product quote details from this screen as well. It may further show the total bundle pricing and bundle savings value. In this bundle scenario, the consumer may be allowed to checkout only from this bundle summary screen, not from the individual product quote summary screen as with single product scenario. Similar to single product quote summary screen, it may also display recommended product sections based on the products in the bundle. For both the single and the bundle product scenario, quote status may be displayed on the cart section of the UI. The quote/bundle summary screen may be enabled to display the pricing, discount and savings information where as in other screens; it only displays the quote status.

The order in which the method 800 is described is not intended to be construed as a limitation, and any number of the described method blocks can be combined in any order to implement the method 800 or alternate methods. Additionally, individual blocks may be deleted from the method 800 without departing from the spirit and scope of the disclosure described herein. Furthermore, the method can be implemented in any suitable hardware, software, firmware, or combination thereof. However, for ease of explanation, in the embodiments described below, the method 800 may be considered to be implemented in the above described in the platform 102.

At block 802, the consumer data along with the geo-spatial data about the products may be received. The consumer data may be mined from social media platforms, consumer's purchase behavior obtained from the online shopping platforms, heuristic data feed of the consumer obtained from number of enterprises as well as applications. Furthermore, the data about products, weather feeds may also be received at a platform 102.

At block 804, various products comprising Line of Business (LoB) products and partner products may be provisioned through the platform 102. The provisioning of the products may be carried based on real time analysis of the data received at the block 802. Provisioning may further comprise, product recommendation, recommendation about bundling of the products, discounts and scheme offered by the product company. The products which get displayed may vary based on access channels. In an embodiment, for Sales Channel, the Product Catalogue may display products which the Sales Associate is licensed and authorized to sell within each jurisdiction. Also, for Customer channel, more simpler & intuitive product storefront maybe displayed.

At block 806, one or more criteria may be received. The one or more criteria may comprise kind of product, the Product Company, and particulars of the product(s) selected etc.

At block 808, after receiving the one or more criteria, quotation for a single or grouped product may be displayed to the consumer through the interface 204 of the platform 102. The quotation may be computed based on rules associated with the product selected, product catalogue, and jurisdiction and the like. Upon selection, the consumer may be enabled to purchase the product through the platform 102.

Although implementations for method and system for provisioning curated insurance service have been described in language specific to structural features and/or methods, it is to be understood that the implementations and/or embodiments are not necessarily limited to the specific features or methods described. Rather, the specific features and methods are disclosed as examples of implementations for method and system for provisioning curated insurance service.

Exemplary embodiments discussed above may provide certain advantages. Though not required to practice aspects of the disclosure, these advantages may include those provided by the following features.

Some embodiments enable a system and a method that offers the consumer specialized and personalized shopping experience from the data curated through the real-time analytics of the consumer data and the product data.

Some embodiments enable a system and a method that provides support for dynamic adding any services or the products to the package comprising various products offered to the consumer.

Some embodiments enable a system and a method that provisions best-fit product ecosystem for the consumer.

Some embodiments enable a system and a method that offers the consumer comprehensive real-time pricing solution with multi-line discounts and further enable the customer to gain visibility into the data about other products in real-time and attain appropriate discounts.

Some embodiments enable a system and a method that enables single checkout with accurate pricing and multiple currencies during multi-product purchase and thereby reduce cost with reference to payment gateway usage.

## Claims

1. A method (800) for provisioning curated insurance service; said method comprising processor implemented steps of:
a. receiving consumer data along with geo-spatial data about insurance products;
b. provisioning through a platform (102), plurality of insurance products to the consumer based on the consumer data;
c. receiving from the consumer, one or more criteria for the insurance product selection; and
d. provisioning quotation for a single or group insurance product to the consumer based on the one or more criteria through the platform (102).

2. The method as claimed in claim 1, wherein the consumer data is obtained from sources selected from a group comprising of social media platforms, consumer's purchase behavior obtained from online shopping platforms, heuristic data feed of the consumer obtained from number of enterprises as well as applications, and weather feeds.

3. The method as claimed in claim 1, wherein the provisioning of the plurality of insurance products is carried out based on real time analysis of the consumer data received.

4. The method as claimed in claim 1, wherein the provisioning of the plurality of insurance products further comprises of insurance product recommendation, recommendation about bundling of the insurance products, discounts and scheme offered by insurance product company.

5. The method as claimed in claim 1, wherein one or more criteria received from the consumer, for the insurance product selection is selected from a group comprising kind of insurance product, the insurance Product Company, and particulars of the insurance product(s) selected.

6. The method as claimed in claim 1, wherein the quotation for a single or grouped insurance product is computed based on a set of rules associated with the insurance product selected, insurance product catalogue, and jurisdiction of the insurance product.

7. The method as claimed in claim 1, further comprises of enabling consumer to purchase the insurance product upon selection through the platform (102).

8. A System (102) for provisioning curated insurance services; said system (102) comprising:
a. one or more processors (202); configured for:
receiving consumer data along with geo-spatial data about insurance products;
provisioning through a platform (102), plurality of insurance products to the consumer based on the consumer data;
receiving from the consumer, one or more criteria for the insurance product selection; and
provisioning quotation for a single or group insurance product to the consumer based on the one or more criteria through the platform (102).
b. a communication interface device (204);
c. one or more internal storage devices (206) operatively coupled to the one or more processors for storing one or more computer data bases (232) storing predetermined data (230) and rules related to insurance applications;
d. a service oriented application architecture (300) executed by said at least one processor, and configured to include presentation, middleware, service and resource layer comprising of frameworks for integration, shopping integration, partner network management, insurance product catalog and real time analytics pertaining to insurance product.

9. The system as claimed in claim 8 wherein said integration framework further comprises of: a product participation framework component (400) configured to facilitate communication between web applications; an application to application data sharing component configured to implement transferring data and user experience from source application to destination application; and a multi-line discount component (500) comprising multiline discount rules configured to display plurality of insurance product values.

10. The system as claimed in claim 8 wherein the at least one partner network management framework is configured to facilitate an online partner integration interface through said communication interface (204) for providing latest prices and other product details and a plurality of consumer reviews and ratings.

11. The system as claimed in claim 8 wherein said partner network management framework is configured to provide an offline partner store in the said internal storage devices (206) to hold information about the partner products, reviews and configured to maintain the affinity of the insurer with a plurality of partner products.

12. The system as claimed in claim 8 wherein said analytics framework comprises data mining from the social media platforms and comprises of infrastructure layer (600), core service layer, configuration layer and integration layer.

13. The system as claimed in claim 8 is configured to support social media feeders, geospatial data feed, weather feeds and plurality of enterprise systems to feed plurality of heuristic consumer data and data from other applications to map the consumer geo locations and affinities to facilitate arriving at consumer and geographical categorization and facilitating mapping with insurance products and partner products.

14. The system as claimed in claimed 8 wherein at least one insurance product catalogue framework is configured to connect the consumer with the correct application to process the quote, display the insurance product and sales associated with the insurance product.

15. A non-transitory computer readable medium comprising program codes executable by at least one processor for provisioning curated insurance services, the program codes comprising:
a. a program code for receiving consumer data along with geo-spatial data about insurance products;
b. a program code for provisioning through a platform (102), plurality of insurance products to the consumer based on the consumer data;
c. a program code for receiving from the consumer, one or more criteria for the insurance product selection; and
d. a program code for provisioning quotation for a single or group insurance product to the consumer based on the one or more criteria through the platform (102).
